# EUROPEAN PATENT APPLICATION

(11) **EP 2 194 503 A1**
(43) Date of publication of application: **09.06.2010**
(21) Application number: 08172790.1
(22) Date of filing: 23.12.2008
(51) Int. Cl.: G06T 5/50

(54) **Method and device for infrared and visible image fusion**

(30) Priority: 27.10.2008 CN 200810166767
(71) Applicant: Guangzhou SAT Infrared Technology Co., Ltd., Guangzhou Guangdong 510730 (CN)
(72) Inventor: Wu, Jiping, Guangzhou Guangdong, 510730 (CN)
(74) Representative: Gervasi, Gemma

(57) **Abstract**

The present invention provides a method and a device for fusing of infrared images and visible images. The method comprises the steps of: capture infrared image and visible image photographed from same angle; fusing-process the infrared image and the visible image to obtain a fusing image; replace the infrared image in a predetermined area of the background image with the fusing image if the infrared image is set as a background image; or replace the visible image in a predetermined area of the background image with the fusing image if the visible image is set as a background image. By fusing-processing the infrared image and the visible image, the ability of identifying the original object is improved, and thus the efficiency of locating the part of the equipment working abnormally is improved.

## Description

### Field of the Invention

The present invention relates to the field of imaging processing, especially to a method and device of infrared and visible imaging fusion.

### State of the art

Infrared imaging sensors are different from conventional visible light imaging sensors. The infrared imaging sensors use infrared detectors to capture the infrared radiation of the object on the ground and record the information of the infrared radiation of the object itself. Although the infrared imaging sensors have a good performance in detecting a thermal object, they are not sensitive to the change in brightness of the background, and have low imaging resolution, leading to the difficulty for people's eyes to watch clearly. By contrast, the visible light imaging sensors are sensitive only to the reflection of the background of an object and have nothing to do with "thermal", and have high resolution and thus provide detailed information of the background of the object.

General speaking, because there exists difference between the infrared reflection performance of an object and that of its background, an infrared image can provide complete information of the object, but the information of the background of the object is not clear. By contrast, a visible image can provide relatively complete information of the background, but the information of the object is not clear. For example, under the circumstance where an infrared imaging sensor is used to detect whether an equipment operates normally, the display of the infrared temperature is used to judge whether the equipment operates normally, and at this time, the images provided by the infrared imaging sensor is a picture of the display of the infrared temperature of the operating equipment, from which the user can judge whether there is overheat in the equipment. However, because the infrared imaging sensor provides low resolution of the background of the image, the user cannot determine the exact location of overheat in the equipment and cannot judge which part of the equipment works abnormally, and thus cause the maintenance of the equipment taking long time. In addition, because the user cannot determine which part of the equipment is overheated from the infrared image, the maintenance becomes more difficult.

It has been found that the existing art has the following problems: the background information of the infrared image provided by the infrared imaging sensor is not clear, and cannot tell the user the exact location working abnormally in the equipment.

### Description of the invention

In order to solve the above problems, the object of the present invention is to provide a method and device of fusing infrared/visible images, in order to improve the ability of identifying the original object, and thus improve the efficiency of locating the part of the equipment working abnormally.

In order to achieve the object, the present invention provides a method and device of fusing infrared/visible images, comprising the steps of:
capture infrared image and visible image photographed from same angle;
fuse the infrared image and the visible image to obtain a fused IR/visible image;
if the infrared image is set as a background image, the infrared image in a predetermined area of the background image is replaced by the fused image; or
if the visible image is set as a background image, the visible image in a predetermined area of the background image is replaced by the fused image.

Preferably, the method further comprises the step of:
adjust transparency of the fused image in the predetermined area.

Preferably, the step of fusion comprises:
superpose and fuse the infrared image and the visible image based on pixels of the images at an adjustable depth proportion.

Preferably, the method further comprises the step of:
judge whether the temperature displayed by the fusing image in the predetermined area exceeds the predetermined temperature threshold, and if yes, give an alarm signal.

The present invention provides a device for fusing infrared images and visible images, comprising:
a photographing module for capturing infrared image and visible image photographed from same angle;
a fusing module connected to the photographing module for fusing-processing the infrared image and the visible image to obtain a fusing image;
a replacing module connected to the fusing module for replacing the infrared image in a predetermined area of the background image with the fusing image if the infrared image is set as a background image, or for replacing the visible image in a predetermined area of the background image with the fusing image if the visible image is set as a background image.

Preferably, the device further comprises: a background image setting module connected to the photographing module for setting the infrared image or the visible image captured by the photographing module as the background image.

Preferably, the device further comprises: a transparency adjusting module connected to the replacing module for adjusting the transparency of the fusing image in the predetermined area.

Preferably, the device further comprises: an alarming module connected to the replacing module for giving an alarm signal if the temperature displayed by the fusing image in the predetermined area exceeds the predetermined temperature threshold.

The above technical solutions have the following advantages: because the infrared image and the visible image captured from same angle are fusing-processed, the user can fuse the two images or create a fusing of images in images to accurately display the part of the equipment where the temperature exceeds the predetermined temperature threshold, which is very helpful for the user to identify and report the abnormal elements and to maintain the abnormal element quickly.

### Description of the drawings

Fig.1 is a flow chart illustrating the method for fusing of infrared images and visible images according to the present invention.
Fig.2 is a view schematically illustrating the device for fusing of infrared images and visible images according to the present invention.

### Description of the Invention

The present invention provides a method for fusing of infrared images and visible images in which the infrared image and the visible image captured from same angle are fusing-processed to obtain a fusing image. The infrared image or the visible image can be selected to be set as a background image and the image in a predetermined area of the background image is replaced with the fusing image. For example, if the infrared image is set as a background image, the infrared image in a predetermined area of the background image is replaced by the fusing image, whereby accurately displaying the part of the equipment where the temperature exceeds the predetermined temperature threshold, which is very helpful for the user to identify and report the abnormal elements and to maintain the abnormal element quickly.

The object, technical solutions, and advantages of the present invention can be well understood by the following detailed description of the invention with reference to the drawings and embodiments. The exemplary embodiments are used to explain, but are not limited to, the present invention.

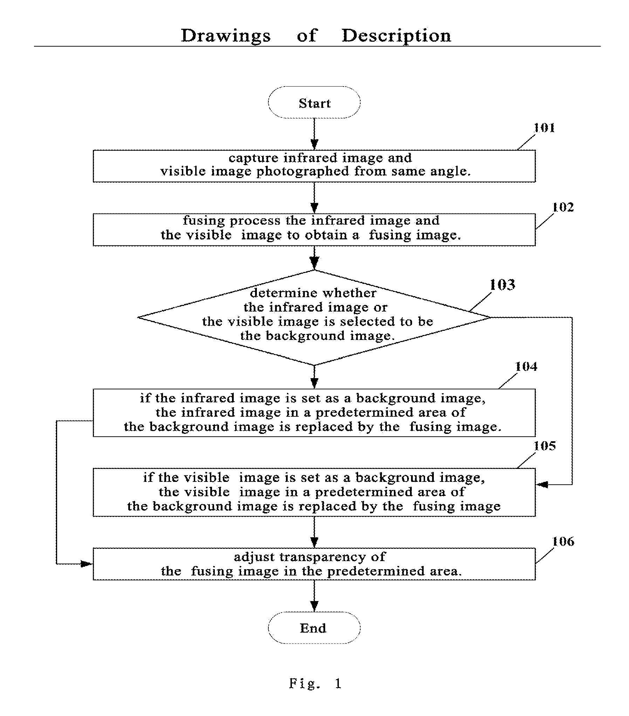

Fig.1 is a flow chart illustrating the method for fusing of infrared images and visible images according to the present invention. The method comprises the steps of:
Step 101: capture infrared image and visible image photographed from same angle.
   In order to fuse infrared image and visible image, it is needed to capture infrared image and visible image photographed from same angle. At this moment, the infrared image can be selected to be set up as a background image of the fusing image, and the visible image can also be selected to be set up as the background image of the fusing image.
   In this embodiment, in order to make the visible image have a good clearness, a visible light sensor with high resolution, such as a visible light sensor with 1,300,000 pixels, can be used to photograph the visible image. As for the infrared image, a un-cooling or a cooling infrared sensor can be used. In this embodiment, the method for capturing infrared image and visible image can be the method same as the method in the prior art, and thus the detailed description is omitted.
Step 102: fusing-process the infrared image and the visible image to obtain a fusing image.
   In other words, superpose-fuse the infrared image and the visible image based on pixels of the images at an adjustable depth proportion to obtain a fusing image of the infrared image and the visible image. Of cause, the method for the fusing is not limited to this method described here.
Step 103: determine whether the infrared image or the visible image is selected to be the background image. If the infrared image is selected to be the background image, then go to Step 104. If the visible image is selected to be the background image, then go to Step 105.
   In this embodiment, the display is made in the way of image in image, and thus one image can be defined as a front image and the other can be defined as a background image. In other words, select one of the infrared image and the visible image captured in Step 101 as a background image, for example, select the infrared image as a background image, then go to Step 104 or Step 105.
Step 104: if the infrared image is set as a background image, the infrared image in a predetermined area of the background image is replaced by the fusing image, and then go to Step 106.
   In order words, first, set the infrared image as a background image, and then replace the infrared image in a predetermined area of the background image with the fusing image. Because the infrared image and the visible image are photographed from same angle, the visible effect of the replaced image is not affected, and thus obtain a fusing of images in images, whereby solving the problem of unable to identify the type of the object in the infrared image. Because the method of replacing the image is a prior art, the detailed description is omitted.
   In this embodiment, in order to identify, a frame, as a reference, can be set around the predetermined area. The predetermined area, for example a rectangle, can be set in advance by the user according to user's needs, and then the user can replace the infrared image with the fusing image according to practical needs.
   In addition, the predetermined area can be set before Step 101, and also can be set at Step 104, which gives the predetermined area mobility. When the predetermined area moves to an area in the infrared image, the infrared image covered by the predetermined area is replaced by the fusing image.
   After Step 104, the determination can be made about whether the temperature reflected by the infrared image in the predetermined area exceeds the temperature threshold. If the temperature reflected by the infrared image in the predetermined area exceeds the temperature threshold, an alarm signal is given in order for the user to react. The temperature threshold can be set according to the working temperature threshold of different elements of the equipment.
Step 105: if the visible image is set as a background image, the visible image in a predetermined area of the background image is replaced by the fusing image, and then go to Step 106.
   In order words, first, set the visible image as a background image, and then replace the visible image in a predetermined area of the background image with the fusing image. Because the infrared image and the visible image are photographed from same angle, the visible effect of the replaced image is not affected, and thus obtains a fusing of images in images, whereby solving the problem of unable to accurately identify the temperature distribution in the equipment in the visible image.
   In this embodiment, in order to identify, a frame, as a reference, can be set around the predetermined area. The predetermined area, for example a rectangle, can be set in advance by the user according to user's needs, and then the user can replace the visible image with the fusing image according to practical needs.
   Likewise, the predetermined area can be set before Step 101, and also can be set at Step 105, which gives the predetermined area mobility. When the predetermined area moves to an area in the visible image, the visible image covered by the predetermined area is replaced by the fusing image.
Step 106: adjust transparency of the fusing image in the predetermined area.
   By adjusting transparency of the fusing image in the predetermined area, the user can accurately determine what kind of equipment the equipment in the image is, which can help the user to maintain the equipment quickly. This step is an optional step.

It can be known from the above description that, because the infrared image and the visible image captured from same angle are fusing-processed, the user can fuse the two images or create a fusing of images in images to accurately display the part of the equipment where the temperature exceeds the predetermined temperature threshold, which is very helpful for the user to identify and report the abnormal elements and to maintain the abnormal element quickly.

In order to use the method described above, the present invention provides a device for fusing of infrared images and visible images. It can be understood that, because the following embodiments are for the above method, the device is made for the steps of the method. However, the present invention is not limited to the following embodiments. Any other devices that can realize the above method fall into the protection scope of the present invention. In the following description, the description same as the above description is omitted.

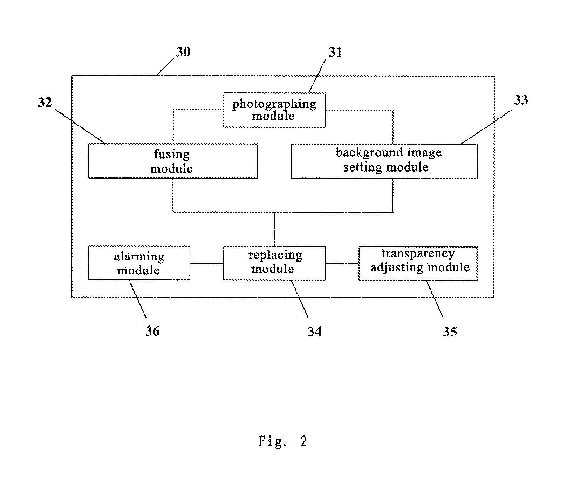

Fig.2 is a view schematically illustrating the device for fusing of infrared images and visible images according to the present invention. The device 30 comprises:
a photographing module 31 for capturing infrared image and visible image photographed from same angle;
a fusing module 32 connected to the photographing module for fusing-processing the infrared image and the visible image to obtain a fusing image;
a background image setting module 33 connected to the photographing module 31 for setting the infrared image or the visible image captured by the photographing module 31 as the background image.
a replacing module 34 connected to the fusing module 32 and the background image setting module 33 for replacing the infrared image in a predetermined area of the background image with the fusing image if the infrared image is set as a background image, or for replacing the visible image in a predetermined area of the background image with the fusing image if the visible image is set as a background image.

In another embodiment, the device 30 further comprises a transparency adjusting module 35 connected to the replacing module 34 for adjusting the transparency of the fusing image in the predetermined area.

In another embodiment, the device 30 further comprises an alarming module 36 connected to the replacing module 34 for giving an alarm signal if the temperature displayed by the fusing image in the predetermined area exceeds the predetermined temperature threshold.

The temperature threshold can be set according to the working temperature threshold of different elements of the equipment. By setting the temperature threshold, the working temperature of the equipment can be avoided being too high, and thus the working life of the equipment is substantially increased.

By the above embodiments, the user can obtain 6 imaging fusing modules based on the obtained infrared image and visible image:

### Module1 1. Simple infrared mode

In this mode, the user can directly capture infrared image, from which the user can obtain the temperature distribution in the equipment. Because the method for capturing infrared image is the same as the method in the prior art, the description is omitted.

### Mode 2. Simple visible mode

In this mode, the user can directly capture visible image. Because the method for capturing visible image is the same as the method in the prior art, the description is omitted.

### Mode 3. Vision + mix

In this mode, the infrared image in the predetermined area is replaced with the fusing image, and the transparency of the fusing image can be adjusted, the position of the fusing image can be adjusted, and the size of the rectangular fusing image can also be adjusted. There is a fine white frame around the edge of the fusing image to distinguish the infrared image from the fusing image.

### Mode 4. IR + mix

In this mode, the visible image in the predetermined area is replaced with the fusing image, and the transparency of the fusing image can be adjusted, the position of the fusing image can be adjusted, and the size of the rectangular fusing image can also be adjusted. There is a fine white frame around the edge of the fusing image to distinguish the visible image from the fusing image.

### Mode 5. Main IR

In this mode, the visible image in the predetermined area is not transparent, and the transparency of the visible image cannot be adjusted, but the position of the visible image can be adjusted, and the size of the rectangular visible image can also be adjusted. There is a fine white frame around the edge of the visible image to distinguish the visible image from the infrared image.

### Mode 6. Main Vision

In this mode, the infrared image in the predetermined area is not transparent, and the transparency of the infrared image cannot be adjusted, but the position of the infrared image can be adjusted, and the size of the rectangular infrared image can also be adjusted. There is a fine white frame around the edge of the infrared image to distinguish the visible image from the infrared image.

The above description is about the embodiments according to the present invention. It can be understood that, for the persons skilled in the art, modifications and variations can be made under the principle of the present invention, and the modifications and variations fall into the protection scope of the present invention.

## Claims

1. A method for fusing of infrared images and visible images, comprising the steps of:
capture infrared image and visible image photographed from same angle;
fusing-process the infrared image and the visible image to obtain a fusing image;
replace the infrared image in a predetermined area of the background image with the fusing image if the infrared image is set as a background image; or
replace the visible image in a predetermined area of the background image with the fusing image if the visible image is set as a background image.

2. A method for fusing of infrared images and visible images according to claim 1, further comprises the step of:
adjust transparency of the fusing image in the predetermined area.

3. A method for fusing of infrared images and visible images according to claim 1, the step of the fusing-process comprises:
superpose-fuse the infrared image and the visible image based on pixels of the images at an adjustable depth proportion.

4. A method for fusing of infrared images and visible images according to claim 1, further comprises the step of:
judge whether the temperature displayed by the fusing image in the predetermined area exceeds the predetermined temperature threshold, and if yes, give an alarm signal.

5. A device for fusing of infrared images and visible images, comprising:
a photographing module for capturing infrared image and visible image photographed from same angle;
a fusing module connected to the photographing module for fusing-processing the infrared image and the visible image to obtain a fusing image;
a replacing module connected to the fusing module for replacing the infrared image in a predetermined area of the background image with the fusing image if the infrared image is set as a background image, or for replacing the visible image in a predetermined area of the background image with the fusing image if the visible image is set as a background image.

6. A device for fusing of infrared images and visible images according to claim 5, further comprises:
a background image setting module connected to the photographing module for setting the infrared image or the visible image captured by the photographing module as the background image.

7. A device for fusing of infrared images and visible images according to claim 5, further comprises:
a transparency adjusting module connected to the replacing module for adjusting the transparency of the fusing image in the predetermined area.

8. A device for fusing of infrared images and visible images according to claim 5, further comprises:
an alarming module connected to the replacing module for giving an alarm signal if the temperature displayed by the fusing image in the predetermined area exceeds the predetermined temperature threshold.
